# EUROPÄISCHE PATENTSCHRIFT

(11) **EP 2 278 532 B1**
(45) Veröffentlichungstag und Bekanntmachung des Hinweises auf die Patenterteilung: **29.07.2015**
(21) Anmeldenummer: 10011622.7
(22) Anmeldetag: 27.06.2005
(51) Int. Cl.: G06K 19/07, G06K 19/077, G06K 7/10, G06K 7/00

(54) **Tragbarer Datenträger**
Portable data carrier
Support de données portatif

(30) Priorität: 28.06.2004 DE 102004031092
(43) Veröffentlichungstag der Anmeldung: 26.01.2011
(62) Teilanmeldung aus: 05755698.7
(73) Patentinhaber: Giesecke & Devrient GmbH, 81677 München (DE)
(72) Erfinder: Finkenzeller, Klaus, 85774 Unterföhring (DE)

(56) Entgegenhaltungen:
- EP-A- 1 280 099
- WO-A1-00/05673
- WO-A1-02/33644
- DE-A1- 19 800 565

## Beschreibung

Die vorliegende Erfindung betrifft einen tragbaren Datenträger, beispielsweise eine Chipkarte, sowie ein Verfahren zur Datenübertragung zwischen einem tragbaren Datenträger mit Transpondereinheit und einem Transponder-Lesegerät.

Transponder werden beispielsweise in Radio-Frequency-Identification-(RFID)-Systemen eingesetzt. Herkömmlich erfolgt sowohl die Energieversorgung eines Transponders in einem RFID-System als auch der Datenaustausch zwischen dem Transponder und einem Lesegerät unter Verwendung magnetischer oder elektromagnetischer Felder. RFID-Transponder besitzen eine elektronische Schaltung und je nach Frequenzbereich eine Antennenspule (z.B. 13,56 MHz) oder eine elektromagnetische Antenne (z.B. 868 MHz). Über die Antenne kann dem Feld des Lesegerätes die zum Betrieb des Transponders benötigte Energie entnommen sowie die Datenübertragung durchgeführt werden.

Bis zu einem bestimmten Abstand zwischen Lesegerät und Transponder, welcher auch als Energiereichweite bezeichnet wird, kann der Transponder dem Feld des Lesegerätes gerade noch ausreichend Energie zum Eigenbetrieb seiner Schaltung entnehmen. Typische Energiereichweiten solcher Systeme sind etwa 10 cm für ISO 14443 und bis zu 1 m für ISO 15693 kompatible Systeme.

Die Reichweite, innerhalb derer eine Kommunikation im System durch Datenübertragung möglich ist, kann erhöht werden durch Verwendung von aktiven Transpondern, also Transpondern mit eigener Energieversorgung. Die Energieversorgung des aktiven Transponders, beispielsweise in Form einer Batterie, betreibt dessen elektronische Schaltung. Herkömmliche Transponder ohne eigene Energieversorgung werden dagegen als passive Transponder bezeichnet.

RFID-Systeme, beispielsweise für verschiedene Kopplungsarten, sowie eine Lastmodulation unter Verwendung eines Hilfsträgers in induktiv gekoppelten RFID-Systemen werden insbesondere unter Kapitel 3.2 in dem "RFID-Handbuch" von Klaus Finkenzeller beschrieben.

Zur einfachen und schnellen kontaktlosen Kommunikation zwischen zwei Geräten wurde von den Firmen Philips und Sony eine induktive Übertragungstechnik entwickelt, welche als sogenannte Nahfeldkommunikation (NFC, Near Field Communication) bekannt ist. Diese Technik wird beispielsweise in Mobilfunkgeräten oder PDAs integriert, um eine Kommunikation zwischen den Geräten oder mit einem Computer zu ermöglichen. Die Kopplung der beiden Geräte findet über Spulen statt, wobei die Trägerfrequenz wie in RFID-Systemen 13,56 MHz beträgt. Wie in dem NFC-Standard ECMA 340 näher beschrieben, gibt es in NFC-Systemen einen aktiven Kommunikationsmodus und einen passiven Kommunikationsmodus. In dem aktiven Modus erzeugen zwei NFC-Einheiten abwechselnd ihr eigenes RF-Feld als Signalträger, schalten also wie in einem klassischen Mobilfunksystem, beide aufeinander abgestimmt, zwischen Sende- und Empfangsbetrieb hin und her. In dem passiven Modus müssen sich die beiden NFC-Einheiten dagegen einigen, welche Einheit als Lesegerät agiert und ein Feld erzeugt, das die andere Einheit dann mittels Lastmodulation beeinflussen kann. Primär aufgrund der verwendeten kleinen Antennendurchmesser sind in NFC-Systemen nur geringe Kommunikationsreichweiten von bis zu 20 cm möglich.

EP 1280099 A1 betrifft eine Schaltung mit Karten- und Kartenleserfunktion. Abhängig vom Ladungszustand einer Batterie wird die Batterie oder ein Gleichrichter als Energieversorgungsquelle für die Schaltung gewählt. Die unabhängigen Ansprüche sind abgegrenzt gegenüber diesem Dokument.

DE 19800565 A1 zeigt ein herkömmliches System bestehend aus Transponder und Basisstation, in welchem ein modifiziertes Lastmodulationsverfahren für den kontaktlosen Datenaustausch eingesetzt wird.

Auch WO 00/05673 A1 zeigt einen Datenträger, welcher Daten durch Lastmodulation mit einem Lesegerät austauscht.

US2003/0169152 beschreibt ein Lesegerät, welches sowohl als lastmodulierende Einheit als auch als Lesegerät auftreten kann, ohne einen Lastmodulator zu benötigen.

Selbst bei aktiven Transpondern ergibt sich das Problem, dass die Datenübertragung vom Transponder zum Lesegerät durch die mit zunehmendem Abstand zwischen Lesegerät und Transponder schwächer werdenden Signale begrenzt ist. In der Regel können daher beispielsweise bei induktiv gekoppelten Systemen, welche nach dem Prinzip der Lastmodulation Daten zum Lesegerät übertragen, auch mit aktivem Transponder keine größeren Reichweiten als 1 bis 2 m erzielt werden. Für RFID-Systeme, die nach dem Prinzip der Rückstreuung (Backscatter) arbeiten, werden dagegen typischerweise Kommunikationsreichweiten von 10 m erreicht.

Daher ist es Aufgabe der Erfindung, die Reichweite der Datenübertragung in einem System umfassend ein Transponder-Lesegerät und eine Transpondereinheit gegenüber herkömmlichen Systemen mit aktiven oder passiven Transpondern zu vergrößern.

Die Aufgabe wird durch die Merkmale der unabhängigen Ansprüche gelöst. In davon abhängigen Ansprüchen sind vorteilhafte Ausgestaltungen und Weiterbildungen der Erfindung angegeben.

Erfindungsgemäß sendet eine Transpondereinheit ein Signal zu einem Transponder-Lesegerät, welches mittels Modulation seines eigenen Feldes durch Transponder mit den Transpondern kommunizieren kann, derart daß das Lesegerät das Signal als Modulation durch einen herkömmlichen Transponder auswerten kann. Anstatt eine Last-Modulation eines Feldes des Lesegerätes auszuführen, sendet also die Transpondereinheit selber ein Feld aus, welches dem Lesegerät eine Modulation des Lesegerät-Feldes durch einen Transponder vortäuscht. Eine erfindungsgemäße Transpondereinheit weist Mittel zum Senden des entsprechend modulierten Signales auf. Die Gesamtreichweite des Systems wird folglich nicht mehr durch die Kommunkationsreichweite des Lesegerätes begrenzt, sondern ist darüber hinaus erweitert bis zu einer Sendereichweite der Transpondereinheit.

In einer vorteilhaften Ausgestaltung besitzt eine erfindungsgemäße RFID-Transpondereinheit eine eigene Energieversorgung, mindestens eine Antenne zum Übertragen von Signalen von und/oder zu einem Lesegerät, sowie eine elektronische Schaltung. Die elektronische Schaltung der erfindungsgemäßen Transpondereinheit umfasst einen Sender, der aus einem Oszillator und einem Modulator besteht.

Erfindungsgemäß umfasst der Modulator einen Ringmodulator. Der Oszillator ist mit der Batterie gekoppelt und vorgesehen, um dem Ringmodulator ein Oszillatorsignal zu liefern. Des weiteren wird dem Ringmodulator über einen zweiten Eingang das Datensignal zugeführt, welches entweder in einer Steuerung der Transpondereinheit erzeugt wird oder welches die Transpondereinheit von extern einspeist. Dabei kann das Datensignal, bevor es dem Ringmodulator zugeführt wird, mit einem Hilfsträger moduliert werden. Charakteristisch für den Ringmodulator ist, dass er eine DSB-Modulation (Double-Side-Band-Modulation) durchführt und unabhängig von der Form des Datensignals (analog oder digital) einsetzbar ist.

Der Ringmodulator kann als analoger oder digitaler Ringmodulator ausgebildet sein. In einer Ausführungsform als digitaler Ringmodulator wird bevorzugt eine logische XOR-Verknüpfung eines Trägerfrequenzsignals mit einem modulierten Hilfsträgersignal durchgeführt. Besonders vorteilhaft ist es, wenn dem digitalen Ringmodulator ein mit dem Datensignal ANDverknüpftes Trägerfrequenzsignal zugeführt wird.

In einer Ausgestaltung führt der Modulator eine logische AND-Verknüpfung eines Trägerfrequenzsignals mit einem modulierten Hilfsträgersignal aus. Dieser Modulator zur logischen Verknüpfung zweier Signale wird vorzugsweise nur dann eingesetzt, wenn das Datensignal ein binäres Signal (2-ASK, BPSK) ist. Bei einer mehrstufigen Modulation (z.B. 4-ASK, 16-ASK, 4-PSK, 16-ASK, etc.) oder bei analogen Signalen muss ein analoger Ringmodulator eingesetzt werden, um die Reichweite der Datenübertragung gegenüber herkömmlichen Systemen zu erhöhen. Ein Vorteil eines Modulators zur logischen AND-Verknüpfung zweier Signale besteht darin, dass er im Vergleich zu einem analogen Ringmodulator einfacher zu realisieren ist.

Der Ringmodulator moduliert das Oszillatorsignal mittels des (modulierten) Datensignals und liefert ein Ausgangssignal, welches dann über die Empfangsantenne oder eine separate Sendeantenne an das Lesegerät übermittelt wird.

In einer bevorzugten Ausgestaltung umfasst der Modulator einen Trägerfrequenzmodulator, in Form des Ringmodulators, und einen Hilfsträgermodulator.

Ein besonderer Vorteil der Verwendung der beschriebenen Modulatoren besteht in der Kompatibilität zum Stand der Technik, da sie ein an das Lesegerät zu sendendes Ausgangssignal liefern, dessen (Frequenz- und Amplituden-) Spektrum dem einer Lastmodulation, wie bereits beschrieben, sehr ähnlich ist. Daher müssen an herkömmlichen Lesegeräten keine technischen Veränderungen vorgenommen werden. Der erfindungsgemäße Transponder kann also mit handelsüblichen RFID-Lesegeräten betrieben werden, wobei die Kommunikationsreichweite ein Vielfaches im Vergleich zu passiven aber auch aktiven Transpondern beträgt. Beispielsweise könnte ein handelsübliches ISO 14443 Lesegerät, welches mit einer induktiv gekoppelten, kontaktlosen Chipkarte entsprechend dem Stand der Technik über eine Entfernung von ca. 10 cm kommunizieren kann, mit einer erfindungsgemäßen Transpondereinheit über ein vielfaches dieser Entfernung kommunizieren.

Ein weiterer Vorteil besteht in der Kompatibilität mit anderen passiven und aktiven Transpondern, so dass sich beide zur selben Zeit im Ansprechbereich des Lesegerätes befinden können und ohne gegenseitige Beeinflussung angesprochen werden können.

Die erfindungsgemäße Transpondereinheit sendet die Daten nur in Seitenbändern im Abstand der Frequenz des (modulierten) Datensignals zur Sendefrequenz des Lesegeräts.

Die elektronische Schaltung der Transpondereinheit umfasst weiterhin in üblicher Weise einen Empfänger, der so ausgelegt ist, dass er Signale von einem Lesegerät detektieren kann. Aus diesen Signalen extrahiert der Empfänger mittels einer Demodulationsschaltung Daten, so dass am Ausgang des Empfängers ein vom Lesegerät übertragener Datenstrom als Basisbandsignal (z.B. als NRZ-Code, Miller-Code, etc.) zur Verfügung steht. Beispielsweise können die Daten eine einfache Anweisung sein, um die Steuerung zu aktivieren. Denkbar sind jedoch auch Daten, die eine komplexere Anweisung an die Steuerung enthalten. Die demodulierten Daten werden der Steuerung in der elektronischen Schaltung zugeführt. Daraufhin wird in der Steuerung ein Datensignal erzeugt, wobei das Datensignal auch auf den extrahierten Daten basieren kann.

Die an der Antenne der Transpondereinheit induzierte Spannung kann ein Problem für die Funktionsweise der erfindungsgemäßen Modulator-Schaltungen darstellen, wenn der Abstand zwischen Transpondereinheit und Lesegerät klein und die induzierte Spannung daher entsprechend groß ist. Daher werden die an das Lesegerät zu sendenden Daten, welche in der Steuerung erzeugt werden, wahlweise dem Lastmodulator oder der erfindungsgemäßen Schaltungsanordnung mit Modulator zugeführt. Vorzugsweise erfolgt die Umschaltung zwischen dem Lastmodulator und der Schaltungsanordnung automatisch, in Abhängigkeit von der Höhe der an der Antenne induzierten Spannung. Die Umschaltung erfolgt derart, daß innerhalb der normalen Kommunikationsreichweite der Lastmodulator und außerhalb der normalen Kommunikationsreichweite der erfindungsgemäße Modulator verwendet wird.

Wird in der Datenübertragung von der Transpondereinheit zum Lesegerät, wie bereits erwähnt, ein Hilfsträgersignal eingesetzt, so ist in einer Ausgestaltung der vorliegenden Erfindung eine Schaltungsanordnung zum Erzeugen und Modulieren dieses Hilfsträgersignals vorgesehen. In einer ersten Alternative ist die Schaltungsanordnung Bestandteil der erfindungsgemäßen Transpondereinheit. Auf eine andere Alternative, in der die Schaltungsanordnung nicht Bestandteil der Transpondereinheit ist, wird später im Detail eingegangen. Vorzugsweise wird die Frequenz des Hilfsträgersignals durch Teilung der Oszillatorfrequenz erzeugt. Die Amplitude des Hilfsträgersignals wird in der Schaltungsanordnung durch die zu sendenden Daten, welche beispielsweise als ein binäres Codesignal vorliegen, zwischen zwei Zuständen umgeschaltet. Dieser Vorgang wird Amplitudentastung (amplitude shift keying, ASK) bzw. ASK-Modulation genannt. Die ASK-Modulation entsteht, mathematisch betrachtet, aus der Multiplikation des binären Codesignals mit dem Hilfsträgersignal. Das modulierte Hilfsträgersignal wird anschließend entweder dem Ringmodulator oder dem Modulator zum logischen Verknüpfen zweier Signale zugeführt. Möglich ist auch eine Phasenmodulation, beispielsweise eine BPSK-Modulation des Hilfsträgersignales. Des weiteren kann die Transpondereinheit der vorliegenden Erfindung einen Spannungsbegrenzer besitzen, welcher vorgesehen ist, die an der Antenne durch das Lesegerät induzierte Spannung zu begrenzen. Damit kann unter anderem das oben beschriebene Problem der Überlast vermieden werden, wenn sich die Transpondereinheit und das Lesegerät in geringem Abstand zueinander befinden. Als Spannungsbegrenzer kann beispielsweise ein Shuntregler eingesetzt werden.

Insbesondere für eine Kommunikation nach dem Standard ISO 14443 Typ A ist das Einhalten eines genauen Takts (Timing) wichtig. Bei herkömmlichen passiven Transpondern wird das Timing auch im Sendebetrieb (Lastmodulation) durch das fortwährend vom Lesegerät empfangene Taktsignal (13,56 MHz) gewährleistet. Im Sendebetrieb einer erfindungsgemäßen Schaltungsanordnung steht ein solches Signal jedoch nicht mehr zur Verfügung. In einer Ausgestaltung der Erfindung wird daher ein Oszillator beispielsweise in Form eines Quarzoszillators vorgesehen.

Um einen Quarzoszillator, der eine große Bauform aufweist, zu vermeiden, wird in einer verbesserten Ausgestaltung der Erfindung der Oszillator über eine Phase-Locked-Loop-(PLL)-Schaltung phasenstarr an das vom Lesegerät empfangene Signal gekoppelt, wenn sich die Transpondereinheit im Empfangsbetrieb befindet. Im Sendebetrieb der Transpondereinheit, also während der Datenübertragung von der Transpondereinheit zum Lesegerät, wird die Regelspannung der PLL-Schaltung konstant gehalten, so dass die Frequenz des Oszillators möglichst stabil erhalten bleibt. Die PLL kann auch als Nachlaufsynchronisation bezeichnet werden. Der Oszillator wird so geregelt, dass er einem Referenzsignal, im vorliegendem Fall dem Taktsignal des Lesegeräts, phasengleich folgt. Die Regelschaltung vergleicht die Phasenlage beider Signale kontinuierlich und gleicht die des Oszillators bei einem Fehlersignal an. Eine PLL-Schaltung wird vor allem zur Frequenzstabilisierung -bzw. Synchronisierung des Oszillators verwendet. Zusätzlich kann vorgesehen werden, das vom Oszillator erzeugte Signal auch der Steuerung zuzuführen und als ein für das Timing relevantes Taktsignal zu verwenden.

Die Möglichkeit, die erfindungsgemäße Transpondereinheit über sehr große Entfernungen auslesen zu können, ist nicht immer erwünscht, beispielsweise zum Schutz der Privatsphäre. Daher ist in einer Ausgestaltung vorgesehen, die erfindungsgemäße Schaltungsanordnung manuell aktivieren zu können, falls die Kommunikation über eine große Reichweite explizit erwünscht ist. Ansonsten kann die Kommunikation über einen in der Transpondereinheit vorgesehenen Lastmodulator erfolgen, welcher nur bei kurzen Distanzen einsetzbar ist. Ist kein Lastmodulator in der Transpondereinheit vorgesehen, kann beispielsweise vorgesehen sein, dass die Transpondereinheit nur dann zum Datenversand aktiviert wird, wenn das vom Lesegerät ausgesendete Signal einen vorbestimmten Code enthält.

Gemäß einer zweiten Alternative ist die Schaltungsanordnung zum Erzeugen und Modulieren des Hilfsträgersignals Bestandteil der erfindungsgemäßen Transpondereinheit selbst. Um dann die Transpondereinheit mit einem (Smart-Card-)Chip des Endgeräts zu verbinden, der beispielsweise zu versendende Daten bereitstellt, kann eine Schnittstelle vorgesehen sein, über welche Daten in binärer Form übertragen werden.

Der Vorteil dieser Alternative besteht darin, dass der Smart-Card-Chip selbst keinerlei HF- (bzw. RFID-)Schnittstelle zur Verfügung stellen muss, da alle notwendigen Funktionen für die Übertragung von Daten von der Transpondereinheit durchgeführt werden.

Vorzugsweise ist die Transpondereinheit in einer in das mobile Endgerät einsetzbaren Karte oder Datenträger integriert. Beispielsweise kann die Transpondereinheit in einer SIM-Karte integriert sein. Der Vorteil besteht darin, dass das mobile Endgerät, beispielsweise ein Mobilfunktelefon oder ein PDA, in welches die Karte mit der erfindungsgemäßen Transpondereinheit eingesetzt wird, keine zusätzliche (integrierte) Antenne benötigt, um als RFID-Einheit einsetzbar zu sein.

Weitere Merkmale und Vorteile der Erfindung ergeben sich aus der folgenden Beschreibung erfindungsgemäßer Ausführungsbeispiele im Zusammenhang mit den begleitenden Zeichnungen. Darin zeigen:
- Figur 1: ein System umfassend eine Transpondereinheit und ein Lesegerät,
- Figur 2: eine Transpondereinheit schematisch mit einer erfindungsgemäßen Schaltung,
- Figur 3: ein Prinzipschaltbild eines analogen Ringmodulators,
- Figur 4: eine Ausführungsform eines Senders für eine Transponderein heit mit digitalem Ringmodulator,
- Figur 5: ein Sender für eine Transpondereinheit mit ASK_Modulator als Trägerfrequenzmodulator,
- Figur 6: eine Sender für eine Transpondereinheit mit ASK_Modulator als Trägerfrequenzmodulator und einem modifizierten Hilfsträgermodulator,
- Figur 7: eine Transpondereinheit, in welcher ein Sicherheitsmodul über eine S²C-Schnittstelle an einen Interfacebaustein angebunden ist,
- Figur 8: ein Interfacebaustein für eine Transpondereinheit gemäß Figur 7,
- Figur 9: eine Transpondereinheit, in welcher ein Chip mit herkömmlicher HF-Schnittstelle an einen Interfacebaustein in einer weiteren Ausführungsform angebunden ist,
- Figur 10: eine Transpondereinheit, in welcher ein Chip mit herkömmlicher HF-Schnittstelle an einen modifizierten Interfacebaustein angebunden ist und
- Figur 11: einen Ausschnitt einer Transpondereinheit, in welcher ein Chip mit herkömmlicher HF-Schnittstelle induktiv an einen Interfacebaustein gekoppelt ist.

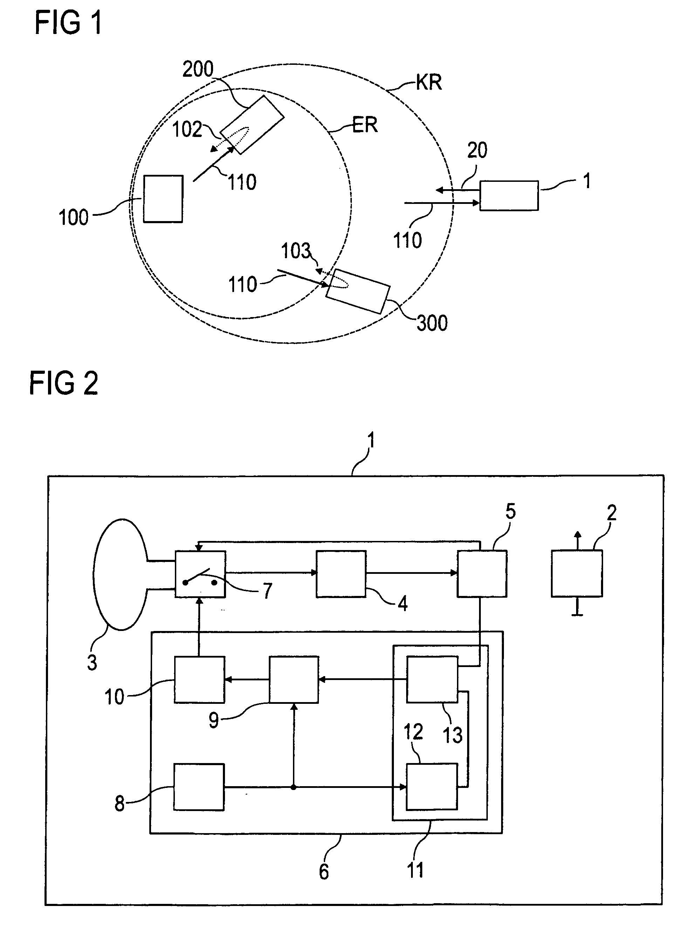

Figur 1 zeigt ein System zur Datenübertragung umfassend eine Transpondereinheit 1 und ein mit der Transpondereinheit 1 zusammenwirkendes Lesegerät 100.

Das herkömmliche Lesegerät 100 kann innerhalb der Energiereichweite ER mit herkömmlichen passiven Transpondern 200 und innerhalb der Kommunikationsreichweite KR mit herkömmlichen aktiven Transpondern 300 Daten austauschen.

Daten können dabei von den Transpondern 200 , 300 zu dem Lesegerät 100 mittels Lastmodulation (induktive Kopplung) übertragen werden.

Die Transpondereinheit 1 sendet zur Datenübertragung an das Lesegerät 100 ein Signal, daß das Lesegerät 100 als Signal eines Transponders auswerten kann, der eine Lastmodulation des Feldes 110 des Lesegerätes 100 durchführt. Im Gegensatz zu den herkömmlichen Transpondern 200, 300, die das Feld 110 des Lesegerätes 100 zu einem modulierten Lesegerätfeld 102,103 modulieren, erzeugt und sendet die Transpondereinheit 1 also ein eigenes moduliertes Feld 20 als das Signal zur Datenübertragung. Die Transpondereinheit 1 setzt somit eigene Energie zum Zwecke der Datenübertragung ein.

Um ein besseres Signal-Rauschverhältnis zu erzielen, wird in einem induktiven Systemen mit einer Trägerfrequenz f_{T} des RFID-Lesegerätes von beispielsweise 13,56 MHz in bekannter Weise ein Hilfsträger f_{H} mit f_{H} < f_{T}, also beispielsweise f_{H} = 212 kHz verwendet. Der Lastwiderstand in der Transpondereinheit wird mit der Frequenz f_{H} ein- und ausgeschaltet, so daß im Signalspektrum neben dem starken Signal der Trägerfrequenz f_{T} des Lesegerätes zwei Hilfsträgersignale im Abstand von +/- f_{H} entstehen. Wird nun der Hilfsträger in der Transpondereinheit 1 entsprechend den zu übertragenden Daten moduliert, so entstehen die Modulationsseitenbänder, welche die Information tragen, im Spektrum jeweils unter- und oberhalb der beiden Hilfsträger. Die zu übertragenden Daten sind also gleichermaßen in den Seitenbändern der Hilfsträger enthalten, welche jeweils auf beiden Seiten der zwei entsprechenden Spektrallinien angeordnet sind. Die Datenübertragung erfolgt hier durch ASK, FSK oder PSK-Modulation des Hilfsträgers im Takt des Datenflusses. Im Gegensatz zur Lastmodulation ohne Hilfsträger, bei der die Daten in Seitenbändern um die Trägerfrequenz des Lesegeräts herum übertragen werden, kann das Hilfsträgersignal im Lesegerät besser ausgefiltert und demoduliert werden, um so die Daten zurückzugewinnen.

Die Transpondereinheit 1 erzeugt und sendet entsprechend ein eigenes Feld 20, welches zumindest die Modulationsseitenbänder um die Trägerfrequenz f_{T} oder die Modulationsseitenbänder um eine Hilfsträgerfrequenz f_{H}, in der Regel aber die Modulationsseitenbänder beider Hilfsträger mitsamt der beiden Hilfsträger, umfasst.

Solch ein System kann vielseitig eingesetzt werden und vermeidet in vielen Anwendungsfällen die Notwendigkeit einer weiteren Schnittstelle im Lesegerät.

Beispielsweise kann sich in einem Gebäude, in dem das System als Zugangssystem eingerichtet ist, jede zugangsberechtigte Person mittels einer Transpondereinheit 1 in Form einer Chipkarte kontaktlos authentisieren. Mit RFID-Lesegeräten des Zugangssystems ausgestattete Türen in dem Gebäude, also auch Zufahrtstore, können durch die Chipkarte so frühzeitig geöffnet werden, daß keine Wartezeit für ein automatisches Öffnen der Tür ensteht.

Ein weiteres Beispiel ist der Einsatz in Warenhäusern, Lager- oder Transportsystemen, in denen respektive Artikel, Lager- oder Transportbehältnisse mit einer erfindungsgemäßen Transpondereinheit ausgestattet sind. So wird es möglich, die Artikel oder Behältnisse ohne größere Reichweitenbeschränkungen insbesondere auch automatisch zu registrieren.

Weiterhin könnte ein mobiles Terminal umfassend eine erfindungsgemäße Transpondereinheit als Wartungs- oder Überwachungseinheit verwendet werden, um eine Vielzahl von RFID-Lesegeräten, beispielsweise an den Kassen eines Supermarktes oder eines Zugangssystems, auf Funktionsfähigkeit zu prüfen oder aus der Ferne zu warten.

Figur 2 zeigt rein schematisch die Transpondereinheit 1, beispielsweise in Form einer induktiv gekoppelten Chipkarte, welche die üblichen, hier nicht explizit gezeigten Bestandteile umfasst. Zur Vereinfachung ist lediglich eine erfindungsgemäße RFID-Transpondereinheit in einer Chipkarte dargestellt. Die Transpondereinheit verfügt über eine Batterie 2, eine induktive Antenne 3 sowie eine elektronische Schaltung 4, 5, 6, 7. Die elektronische Schaltung besteht im wesentlichen aus drei Funktionsblöcken, einem Empfänger 4, einer Steuerung 5 und einem Sender 6. Ein Schalter 7 dient zur Umschaltung der Antenne 3 zwischen dem Empfänger 4 und dem Sender 6.

Der Empfänger 4 ist vorgesehen, ein vom Lesegerät 100 übertragenes Signal zu demodulieren, um daraus Daten zu extrahieren. Die extrahierten Daten werden an die Steuerung 5 weitergeleitet, welche sie verarbeitet und an das Lesegerät 100 zu versendende Daten erzeugt. Des weiteren übermittelt die Steuerung 5 ein Steuersignal an den Schalter 7, welcher zwischen Empfangs- und Sendebetrieb der Transpondereinheit umschaltet. Es kann aber stattdessen zum Senden eine separate Antenne vorgesehen werden. Als Steuerung 5 ist beispielsweise ein Teil des Betriebssystem eines tragbaren Datenträgers, wie einer Chipkarte, verwendbar.

Der Sender 6 besteht aus einem Oszillator 8, einem Modulator, wobei zunächst eine Ausführung als Ringmodulator 9 beschrieben wird, und einem Endverstärker 10. Desweiteren ist der Sender 6 der in Figur 2 dargestellten Transpondereinheit mit einer elektronischen Baugruppe 11 zum Erzeugen und Modulieren eines Hilfsträgersignals erweitert, um die Datenübertragung von der Transpondereinheit zu einem Lesegerät 100 mit einem Hilfsträgersignal durchzuführen. Das Hilfsträgersignal kann je nach Verwendung der Transpondereinheit unterschiedliche Frequenzen besitzen, beispielsweise 848 kHz nach ISO 14443, 424 kHz nach ISO 15693 und 212 kHz für LEGIC, aber gegebenenfalls auch ganz entfallen.

In der in Figur 2 gezeigten Transpondereinheit ist vorgesehen, dass die Baugruppe 11 mittels eines Frequenzteilers 12 die Oszillatorfrequenz durch einen bestimmten Faktor teilt, beispielsweise durch binäre Teilung. Das dadurch erzeugte Hilfsträgersignal wird mit den zu sendenden Daten, welche der Baugruppe 11 von der Steuerung 5 zugeführt werden, moduliert.

Die Modulation des Hilfsträgers in der Baugruppe 11 erfolgt beispielsweise in einem AND-Gatter 13 durch eine sogenannte 100% Amplitudentastung (Amplitude Shift Keying, ASK). Dabei wird die Amplitude des durch Frequenzteilung erzeugten Signals anhand der zu sendenden Daten zwischen zwei Zuständen "on" und "off" umgeschaltet. Alternativ hierzu kann eine (B)PSK-Modulation, beispielsweise nach ISO 14443 Typ B, oder eine FSK-Modulation erfolgen.

Um die aktiven Bauteile der Transpondereinheit zumindest teilweise mit Energie zu versorgen und um die Energiereichweite zwischen der Transpondereinheit 1 und dem Lesegerät 100 zu erhöhen, besitzt der erfindungsgemäße Transpondereinheit eine Batterie 2.

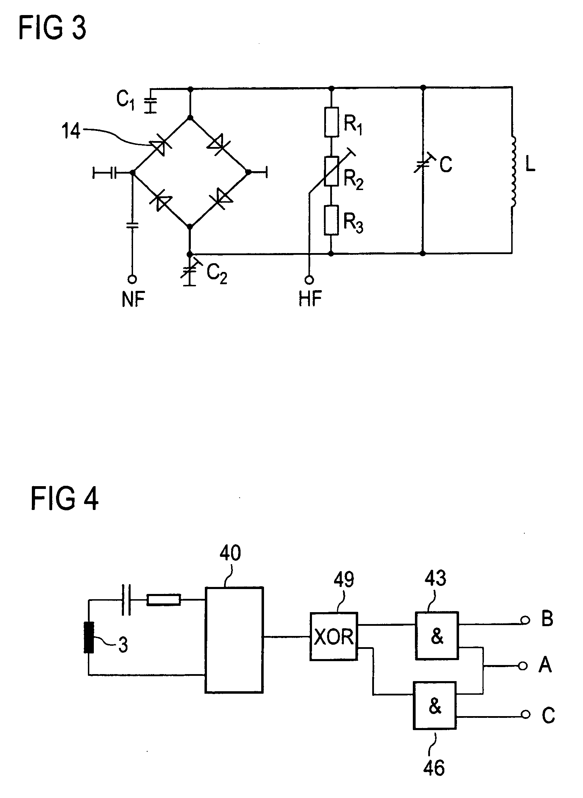

Sowohl das Oszillatorsignal wie auch das in der Baugruppe 11 erzeugte ASK-modulierte Signal werden dem Ringmodulator 9 zugeführt, dessen Schaltungsaufbau weiter unten anhand von Figur 3 genauer beschrieben wird.

Der Ringmodulator 9 hat die Besonderheit, dass er eine Sonderform der Amplitudenmodulation durchführt. Wie bei der üblichen Amplitudenmodulation werden im Frequenzspektrum betrachtet zwei Spektrallinien im Abstand der Frequenz des ASK-modulierten Signals um die Frequenz des Oszillatorsignals, die sogenannte Trägerfrequenz, erzeugt. Bei der Amplitudenmodulation im Ringmodulator 9 wird die Trägerfrequenz des starken und energiereichen Oszillatorsignals weitgehend unterdrückt. Die im ASK-modulierten Signal enthaltenen, zu sendenden Daten befinden sich nach der Amplitudenmodulation im Ringmodulator 9 in Seitenbändern um die zwei Spektrallinien der Hilfsträgerfrequenz. Eine solche Modulation wird Double-Side-Band-(DSB)-Modulation bzw. Double-Side-Band-Supressed-Carrier-(DSSC)-Modulation genannt. Mit der Trägerfrequenz werden keine Daten übertragen. Vielmehr wird durch den Einsatz des Ringmodulators 9, der die Trägerfrequenz unterdrückt, das Ziel erreicht, entweder mit geringerer Sendeleistung oder mit deutlich erhöhter Reichweite Daten an das Lesegerät 100 senden zu können. Die erhöhte Reichweite ist vor allem dann möglich, wenn die gesamte Sendeleistung in die Seitenbänder gesteckt wird, in denen sich die zu sendenden Daten befinden. Zwar wird die Trägerfrequenz grundsätzlich zur Demodulation des Signals benötigt, um im Lesegerät die von der Transpondereinheit übermittelten Daten zu extrahieren. Da die Trägerfrequenz aber ohnehin im Lesegerät vorliegt, ist es nicht notwendig, dass das Transpondersignal selbst diese Frequenz enthält.

Am Ausgang des Ringmodulators 9 steht dann ein Ausgangssignal zur Verfügung, welches die zwei Modulationsseitenbänder enthält und mit einem durch Lastmodulation erzeugten Signal (hinreichend genau) identisch ist. Das durch den Ringmodulator 9 erzeugte Ausgangssignal kann dann mittels des Verstärkers 10 ggf. noch verstärkt werden und über den Schalter 7, welcher durch ein Signal der Steuerung 5 auf den Sendebetrieb der Transpondereinheit umgeschaltet wird, der Antenne 3 zum Versand der zu sendenden Daten zugeführt werden.

Der direkte Anschluss des Ausgangs des Ringmodulators an die Antenne ist ebenso möglich. Dann muss jedoch die Antenne entsprechend angepasst werden und eine mögliche Rückwirkung des vom Lesegerät eingekoppelten Signals auf den Ringmodulator beachtet werden, da üblicherweise zum Senden und Empfangen die selbe Antenne genutzt wird und da das Lesegerät fortwährend sendet.

Die Transpondereinheit 1 wird in einem ersten (Aktiv-)Betriebsmodus als aktiv sendender Transponder betrieben. In einem zweiten (Passiv-)Betriebsmodus arbeitet die Transpondereinheit dagegen wie ein gewöhnlicher passiver Transponder, der eine Lastmodulation auf dem Feld des Lesegeräts ausführt.

Beispielsweise kann der Empfänger 4 zusätzlich als herkömmlicher, durch die Steuerung 5 angesteuerter Lastmodulator ausgebildet sein. Die Steuerung 5 schaltet dann entweder den Sender 6 ein und den Lastmodulator ab oder den Lastmodulator ein und den Sender 6 ab. Der Schalter 7 wird dementsprechend geschaltet. Als Kriterium für das Umschalten von einem passiven in einen aktiven Betriebszustand kann beispielsweise die empfangene Signalstärke, das Vorliegen und/oder Ausreichen einer externen Spannungsversorgung (an einem optionalen nicht gezeigten Anschluß Vcc) oder das Ausreichen einer internen Spannungsversorgung (Ladezustand der Batterie 2) dienen. Es ist somit beispielsweise möglich eine Transpondereinheit 1 erst passiv zu betreiben und bei beispielsweise unabsichtlich zunehmendem Abstand zum Lesegerät in einen aktiven Betriebsmodus umzuschalten.

Auch die Art der Anwendung, für welche die Daten übertragen werden, kann ein Kriterium für den Betriebsmodus sein. So sollte die Transpondereinheit bei sicherheitskritischen Anwendungen nur im passiven Betriebsmodus arbeiten. Dagegen wird eine unkritischere Anwendung, wie eine Prüfung der Zugangsberechtigung zu Räumen oder Gebäuden, vorzugsweise im aktiven Betriebsmodus arbeiten. Ein Defaultwert für den allgemein oder aktuell bevorzugten Betriebsmodus sollte beispielsweise über ein Endgerät, in welches die Transpondereinheit eingesetzt oder integriert ist, für den Besitzer der Transpondereinheit wählbar sein. Das Umschalten zwischen den aktiven und passiven Betriebsmodi erfolgt vorzugsweise während des Empfangs von Daten durch die Transpondereinheit, also im aktiven oder passiven Empfangsbetrieb.

In Figur 3 ist ein Prinzipschaltbild eines Ringmodulators 9 dargestellt. Wie bereits beschrieben, ist das Wesentliche an der Verwendung des Ringmodulators 9, dass er eine Amplitudenmodulation durchführt, wobei zwar die Modulationsseitenbänder eines Hilfsträgers in gewohnter Weise erzeugt werden, die Trägerfrequenz jedoch weitestgehend unterdrückt wird. Beispielsweise kann in der erfindungsgemäßen Transpondereinheit ein MC1496 Balanced Modulator der Firma ON Semiconductor eingesetzt werden, der besonders gut zur Trägerunterdrückung geeignet ist. Der Ringmodulator kann vollständig auf einem Transponderchip integriert werden, wodurch ein erfindungsgemäßer Transponderchip bei vollständiger Integration aller Bestandteile lediglich Anschlüsse für die Antenne 3 und die Spannungsversorgung benötigt.

Der Eingang HF des Ringmodulators 9 wird mit dem hochfrequenten Ausgangssignal des Oszillators 8 gespeist. Dabei entspricht die Frequenz des Oszillatorsignals vorzugsweise genau der Sendefrequenz des Lesegeräts 100 (z.B. 13,56 MHz). Der Eingang NF des Ringmodulators 9 wird mit einem Datensignal im Basisband (z.B. für Felica-System) oder mit einem modulierten Hilfsträger (z.B. bei ISO 14443, ISO 15693), wie oben beschrieben, gespeist.

Vier Dioden 14 sind im Ringmodulator 9 zu einem Ring zusammengeschaltet, indem jeweils eine Anode an eine Katode der folgenden Diode 14 angeschlossen ist. Eine Ecke der Diodenbrücke liegt an Masse und das Signal am Eingang NF wird an der gegenüberliegenden Ecke kapazitiv eingekoppelt. Um eine gute Trägerunterdrückung zu erzielen, wird das Oszillatorsignal über den Eingang HF über eine einstellbare Widerstandsbrücke eingekoppelt.

Das am Eingang NF in den Ringmodulator 9 eingespeiste Datensignal im Basisband oder modulierte Hilfsträgersignal wird im Rhythmus der Schwingung des Oszillatorsignals zwischen eigentlicher und invertierter Form umgeschaltet, wodurch die Trägerfrequenz durch die somit entgegengesetzten symmetrischen Spannungen aufgehoben wird. Eine in Figur 3 dargestellte Schaltung wird auch als Balance-Modulator bezeichnet.

Figur 4 zeigt schematisch einen alternativen Aufbau des Senders einer Transpondereinheit mit einem digitalem Ringmodulator.

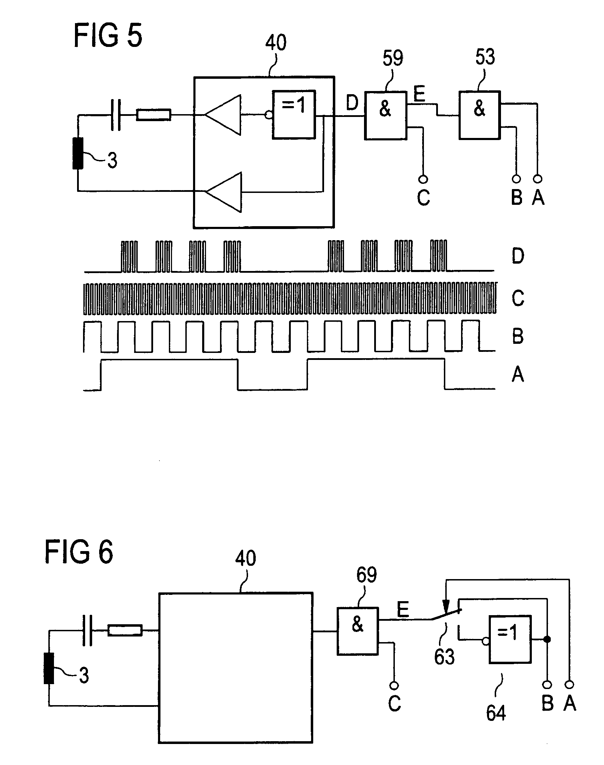

Unverändert gegenüber dem Aufbau gemäß Fig. 2 wird das binäre Datensignal A durch ein AND-Gatter 43 mit einem Hilfsträgersignal B verknüpft. Das verknüpfte Signal liegt an einem Ringmodulator 49 an. Als digitaler Ringmodulator 49 kann ein XOR-Glied verwendet werden. Im Unterschied zu dem Aufbau des Senders in Fig. 2 wird ein Trägersignal C nicht direkt an den Eingang des Ringmodulators 49 angelegt. Vielmehr wird das Trägersignal C in einem AND-Gatter 46 zunächst mit einem Datensignal A verknüpft. Diese Anordnung erzielt, wie unten genauer beschrieben, einen besseren Wirkungsgrad. Das Ausgangssignal des Ringmodulators 49 wird in einem Verstärker 40 verstärkt, bevor es über die Antenne 3 als Feld der Transpondereinheit ausgesendet wird. Die Signaltypen A bis C werden im Folgenden beispielhaft mit Bezug auf Fig. 5 näher beschrieben.

Figur 5 zeigt schematisch einen alternativen Sender einer Transpondereinheit ohne Ringmodulator.

Der Sender dient der Erzeugung eines amplitudenmodulierten Signals, wobei der dargestellte Sender vorzugsweise für binäre Datensignale A eingesetzt wird, wodurch ein OOK-Signal (on-off-keying) bzw. ein 2-ASK Signal entsteht. Das Datensignal A im Basisband (z.B. ein NRZ- oder Manchester-Signal), ein Hilfsträgersignal B (z.B. 848 kHz bei ISO/IEC 14443) und ein Trägersignal C (z.B. 13,56 MHz bei ISO/IEC 14443) werden mittels geeigneter Logikschaltungen 53, 59 AND-verknüpft, wobei zuerst die Signale A und B mittels der Schaltung 53 AND-verknüpft werden, woraus das Signal E entsteht. Das Signal E wird dann mit dem Signal C mittels der Schaltung 59 AND-verknüpft, woraus das Signal D entsteht. Funktional übernimmt hier die Schaltung 59 die Funktion des Modulators und die Schaltung 53 die Rolle des AND-Gatter 13 aus Fig. 2.

Das von einer Antenne 3 an ein Lesegerät ausgehende Signal D weist dabei ein Frequenzspektrum auf, das einem mittels Lastmodulation entstandenen Frequenzspektrum gleicht. Das Signal D kann mittels eines Verstärkers 40 ggf. noch verstärkt werden. Der Verstärker 40 kann beispielsweise ein Gegentaktverstärker mit digitalen Push-Pull Ausgangsverstärkern sein.

Figur 6 zeigt schematisch eine leichte Abwandlung des Senders der Figur 5.

In dem Sender gemäß Figur 5 wird ein amplitudenmodulierten Hilfsträgersignals erzeugt, dagegen erzeugt der in Figur 6 gezeigte Sender ein phasenmoduliertes Hilfsträgersignal. Dieser Sender, wie auch der Sender der Figur 5, wird in einer erfindungsgemäßen Transpondereinheit vorzugsweise nur dann eingesetzt, wenn das Datensignal A ein binäres Signal ist. Dementsprechend erzeugt der dargestellte Sender ein BPSK-Signal (2-PSK, Binary Phase Shift Keying). Dabei werden ein Hilfsträgersignal B (z.B. 848 kHz bei ISO/IEC 14443) und ein Trägersignal C (z.B. 13,56 MHz bei ISO/IEC 14443) mittels der Schaltung 69 AND-verknüpft. Das Datensignal A im Basisband (z.B. NRZ- oder Manchester-Signal) schaltet dabei - mit Hilfe eines Schalters 63 und eines Inverters 64 - das Hilfsträgersignal B zwischen einem invertierten und einem nicht-invertierten Zustand um. Dies entspricht in der Wirkung einer Phasenmodulation um 180° (BPSK, binäre Phasentastung).

Ein Signal D, welches durch eine einfache AND-Verknüpfung des phasenmodulierten Hilfsträgersignals E mit dem Trägersignal C entsteht und mittels der Antenne 3 ausgesendet wird, weist vorteilhafterweise ein Frequenzspektrum auf, welches dem einer Lastmodulation mit einem BPSKmodulierten Hilfsträger gleicht.

Die nachfolgende Tabelle zeigt einen Überblick über die logische Verknüpfung der Signale, den Stromverbrauch und die Reichweite für unterschiedliche digitale Modulationsschaltungen (Trägerfrequenz TF = 13,56MHz; Hiflsträgerfrequenz HT = 868kHz und Modulationssignal MS im Basisband, Manchester 106kBit/s).

| Modulationsschaltung | Logische Verknüpfung | Stromverbrauch | Reichweite |
|---|---|---|---|
| ISO/IEC 1443 A | | | |
| Digitaler Ringmodulator XOR | (HT ∩ MS) XOR TF | 100% | 100% |
| Optimierter Ringmodulator | (HT ∩ MS) XOR (TF ∩ MS) | 50% | 100% |
| ASK-Modulator | TF ∩ (HT ∩ MS) | 25% | 83% |

| ISO/ IEC 14443 B und HIB | | | |
|---|---|---|---|
| Digitaler Ringmodulator XOR | ((HT ∩ MS) ∪ (HT\ ∩ MS\)) XOR TF | 100% | 100% |
| ASK-Modulator | ((HT ∩ MS) ∪ (HT\ ∩ MS\)) ∩ TF | 50% | 83% |

Bei der Datenübertragung von einem Transponder zum Lesegerät wird nach ISO/IEC 14443-3/Typ A bei der Initialisierungs-Bitrate von 106 kBit/ ein ASK-modulierter Hilfsträger (OOK, on-off-keying: HT ∩ MS) eingesetzt. Wird dieses Signal entsprechend dem erfindungsgemäßen Verfahren aktiv nachgebildet, so können die benötigten Seitenbänder am effektivsten mit einem Ringmodulator erzeugt werden. Die hierbei entstehende Zweiseitenbandmodulation (DSB) sollte die besten Ergebnisse hinsichtlich Kommunikationsreichweite zeigen, da dabei die Trägerfrequenz (13,56 MHz) unterdrückt wird und die verfügbare Energie in den Seitenbändern bereit gestellt wird.

Würde man einfach ein XOR-Glied als digitalen Ringmodulator in der Schaltungsanordnung gemäß Figur 2 verwenden, so erhielte man eine schlechte Trägerunterdrückung bei dem untersuchten Signal nach ISO/IEC 14443 - Typ A. Dies rührt vor allem daher, dass das Trägersignal auch in den Modulationspausen, also zu 100% der Zeit, ausgesendet wird und führt zu einer unnötig hohen Stromaufnahme.

Bei der Verwendung eines ASK-modulierten Hilfsträgers (OOK, z. B. 14443/TypA) ist es in jedem Fall sinnvoll, das zur Einspeisung in den digitalen Ringmodulator vorgesehene Trägerfrequenzsignal TF mit dem Basisbandsignal MS mittels einer logischen UND-Verknüpfung zu verknüpfen (TF ∩ MS) und das daraus resultierende Signal in den einen Eingang des digitalen Ringmodulators einzuspeisen. Hierdurch ergibt sich eine Reduzierung der Stromaufnahme auf 50%, verglichen mit dem einfachen Ringmodulator. Das HF-Signal wird dann nur zu den Zeitpunkten ausgesendet, zu denen auch der Hilfsträger eingeschaltet ist. Die Kommunikationsreichweite dieser Schaltung entspricht exakt der Reichweite des einfachen digitalen Ringmodulators. Die Trägerfrequenz ist nun im Ausgangsspektrum deutlich unterdrückt, so wie es von einem Ringmodulator zu erwarten ist. Eine derartige Schaltungsanordnung wurde bereits mit Bezug auf Figur 4 beschrieben.

Der ASK-Modulator wird, wie in Fig. 4 gezeigt, durch eine UND-Verknüpfung aller Eingangssignale realisiert. Das Ausgangssignal besteht nur mehr aus Trägerfrequenzbursts im Takt der Hilfsträgerfrequenz und des Modulationssignals im Basisband. Hinsichtlich der Reichweite müssen Einbußen hingenommen werden, die Reichweite sinkt auf 83 % verglichen mit dem Ringmodulator. Die Stromaufnahme hingegen beträgt nur noch 25 % verglichen mit dem einfachen Ringmodulator. Diese Modulationsschaltung erscheint somit als besonders vorteilhaft, da der Energieverbrauch der Schaltung mit geringen Abstrichen in der Reichweite auf 25 % gesenkt werden kann.

Für ein externes HF-Interface - beispielsweise mit der später genauer beschriebenen S2C-Schnittstelle - sollte bevorzugt ein ASK-Modulator eingesetzt werden, da hierbei die Leistungsaufnahme am geringsten ist. Wird das HF-Interface in einen Smart-Card-Chip integriert, oder wird ein HF-Interface verwendet, welches das Signal (TF ∩ MS) bereit stellt, so wird bei ausreichender Energie bevorzugt der optimierte Ringmodulator eingesetzt werden. Soll dagegen Energie gespart werden, so kann auch hier der ASK-Modulator eingesetzt werden.

Bei einer Datenübertragung von einem Transponder zum Lesegerät nach ISO/IEC 14443-3/Typ B, sowie bei Baudraten von 212 kBit/s und höher, für die beiden Interfacetypen A und B wird ein BPSK-modulierter Hilfsträger (Binary Phase Shift Keying) eingesetzt.

Bei der aktiven Nachbildung eines solchen Signals erbringt auch hier ein Ringmodulator die besten Ergebnisse hinsichtlich Kommunikationsreichweite. Der digitale Ringmodulator zeigt ein gutes Verhalten hinsichtlich der Trägerunterdrückung. Die relative Stromaufnahme beträgt jedoch 100%, da während der gesamten Dauer eines Bits HF-Energie abgestrahlt wird.

Der ASK-Modulator zeigt ein schlechtes Verhalten hinsichtlich der Trägerunterdrückung. Die Stromaufnahme sinkt gegenüber dem Digitalen Ringmodulator auf 50%.

Für BPSK- oder auch FSK-modulierte Hilfsträger soll bevorzugt ein ASK-Modulator eingesetzt werden, da der Sender hierbei die geringste Stromaufnahme benötigt. Steht ausreichend Energie zur Verfügung, kann jedoch auch der einfache digitale Ringmodulator eingesetzt werden. Ein optimierter digitaler Ringmodulator ist nicht möglich, da bei PSK- oder FSK-Modulation des Hilfsträgers, dieser während der gesamten Dauer eines Bits gesendet werden muss.

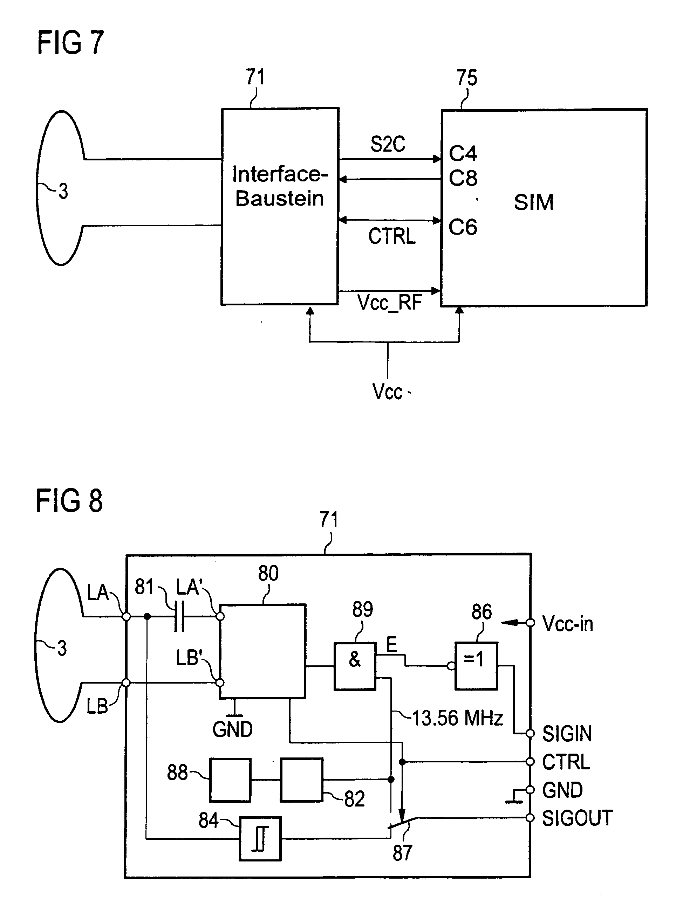

Im Folgenden wird mit Bezug auf die Figuren 7 bis 11 auf vorteilhafte Möglichkeiten eingegangen, eine erfindungsgemäße Schaltung in Verbindung mit bekannten Komponenten zu verwirklichen.

Es gibt Smart-Card-Chips, die eine von der Firma Philips definierte, sogenannte S2C-Schnittstelle aufweisen, um den Smart-Card-Chip mit einer HF-Schnittstelle eines NFC-Geräts zu verbinden. Derartige Smart-Card-Chips verfügen zwar über Hardwaremittel zum Erzeugen und Dekodieren von auf einer ISO/ IEC 14443 Schnittstelle benötigten Signalen (Miller Code, Manchester Code, Hilfsträger 848 kHz). Jedoch besitzt ein solcher Chip keine eigene HF-Schnittstelleneinheit.

Figur 7 zeigt schematisch eine Transpondereinheit, gebildet durch einen an eine Antenne 3 angeschlossenen Interfacebaustein (Schnittstelleneinheit) 71 und einen Chip 75 mit einer geeigneten Schnittstelle, beispielsweise einer S2C-Schnit-tstelle. Eine derartige Transpondereinheit kann beispielsweise in einem Mobilfunkgerät mit Hilfe der SIM-Karte als Chip 75 gebildet werden, die dann vorzugsweise über eine oder mehrere unbelegte Kontaktflächen (C6 und/ oder C4, C8) der SIM-Karte mit dem Interface-Baustein 71 verbunden ist.

Sowohl der Interface-Baustein 71 als auch der Chip 75 können Ihre Versorgungsspannung von dem Gerät beziehen, in welchem sie vorzugsweise reversibel angeordnet sind. Der Interfacebaustein 71 kann in einem zweiten Betriebsmodus als gewöhnlicher Transponder agieren und den Chip mit einer Betriebsspannung Vcc_RF versorgen.

Figur 8 zeigt schematisch genaueren Aufbau eines Interfacebausteins für einen Chip mit S2C-Schnittstelle.

Der Interfacebaustein 71 ist mit einem Signaleingang SIGIN und einem Signalausgang SIGOUT ausgestattet, um Signale von der Antenne zu dem Chip (nicht gezeigt) und vom Chip, welcher das modulierte Hilfsträgersignal generiert, zu der Antenne zu leiten. Ein Signal an SIGOUT besteht aus einem 13,56 MHz TTL-Signal, welches gegebenenfalls ein Modulationssignal eines entfernten Lesegerätes enthält.

Der Interfacebaustein 71 umfaßt einen Verstärker 80, ein AND-Gatter 89, einen Oszillator 88, einen Frequenzteiler 82, einen Signalformer 84 und einen Schalter 87. Der Verstärker 80 kann beispielsweise ein Gegentaktverstärker mit (digitalen) Push-Pull Ausgangsverstärkern (nicht gezeigt) sein. Des weiteren besitzt der Interfacebaustein zwei Antennenanschlüsse LA und LB und eine Serienkapazität 81. Darüber hinaus besitzt der Interfacebaustein 71 Anschlüsse Vcc-in und GND zur Energieversorgung und einen Steuereingang CTRL, um zwischen einem Sende- und Empfangsbetrieb des Interfacebausteins mittels des Schalters 87 umzuschalten.

Das extern modulierte Hilfsträgersignal wird über eine geeignete Schnittstelle (z.B. S2C Interface von Philips) an den Signaleingang SIGIN des Interfacebausteins 71 geführt und dort wie nachfolgend beschrieben weiter verarbeitet. Das Hilfsträgersignal ist beispielsweise ein 848kHz TTL-Signal, welches ASK (ISO/ IEC 14443 A, Manchester Code) oder BPSK (ISO/ IEC 14443 B, NRC Code) moduliert ist.

Befindet sich der Interfacebaustein im Sendebetrieb, d.h. es findet eine kontaktlose Datenübertragung an ein externes Lesegerät oder ein NFC-Gerät statt, so wird am Signaleingang SIGIN durch den Smart-Card-Chip ein moduliertes Hilfsträgersignal eingespeist und optional in einem Inverter 86 invertiert. Das invertierte Signal E wird im AND-Gatter 89 als Trägerfrequenzmodulator mit einem 13,56 MHz Trägerfrequenzsignal verknüpft und dem Verstärker 80 zugeführt.

Die Antenne 3 und die Serienkapazität 81 bilden einen Reihenschwingkreis, welcher mit den Ausgängen LA' und LB' des Verstärkers 80 verbunden ist, so dass der im Resonanzfall fließende HF-Strom im Antennenschwingkreis nur durch die ohmschen Widerstände in den Leitungen und im Verstärker 80 begrenzt wird. Dadurch wird eine größtmögliche Sendeleistung des Interfacebausteins erreicht.

Ferner kann dem Smart-Card-Chip über den Schalter 87 im Sendebetrieb über den Ausgang SIGOUT ein konstantes 13,56 MHz Taktsignal vom Oszillator 88 zugeführt werden, sofern er ein solches (externes) Taktsignal zum Betrieb benötigt, um einen genauen Takt (Timing) einzuhalten. Wie bereits beschrieben, ist dies für eine Kommunikation nach dem Standard ISO 14443 Typ A notwendig.

Im Empfangsbetrieb wird dem Smart-Card-Chip über den Schalter 87 und den Ausgang SIGOUT ein digitalisiertes, von der Antenne 1 abgegriffenes Empfangssignal zugeführt. Der Signalformer 84 funktioniert dabei als Verstärker, um auch schwache Signale empfangen zu können, und als Schwellenschalter, um am Ausgang des Signalformers ein digitales Ausgangssignal zur Verfügung zu stellen. Beispielsweise kann als Schwellenschalter ein Schmitt-Trigger eingesetzt werden, der abhängig vom Über- bzw. Unterschreiten eines vorbestimmten Schwellenwerts einen eindeutigen High- bzw. Low-Pegel ausgibt.

Über den Steuereingang des Gegentaktverstärkers 80 werden die Push-Pull-Ausgänge der Ausgangstreiber (siehe Verstärkereinheiten in Fig. 5) auf GND geschaltet, so dass aus der Antenne 3 und dem Kondensator 41 ein Parallelschwingkreis entsteht. Um Energie zu sparen, kann der Verstärker 80 im Empfangsbetrieb des Interfacebausteins in einen Stromsparmodus geschaltet werden.

Der Oszillator 88 erzeugt das im Sendebetrieb benötigte 13,56 MHz Trägerfrequenzsignal. Kann der Oszillator im Empfangsbetrieb nicht abgeschaltet werden, da sein Einschwingvorgang ggf. zu lange dauert, so wird der Oszillator im Empfangsbetrieb des Interfacebausteins bevorzugt auf einer Vielfachen N des Trägerfrequenzsignals (z.B. 27,120 MHz) betrieben, um das ggf. schwache Empfangssignal nicht durch Übersprechen zu stören. Im Sendebetrieb kann dann durch Teilung des Oszillatorsignals durch N mittels eines optionalen Teilers 82 das benötigte 13,56 MHz Signal erzeugt werden.

Der Steuersignaleingang CTRL für ein Steuersignal ist optional, da sich das Steuersignal zum umschalten des Betriebsmodus auch aus dem Eingangssignal am Signaleingang SIGIN ableiten lässt. Beispielsweise kann ein monostabiles Zeitglied (Monoflop) aus dem Eingangssignal an SIGIN ein Steuersignal erzeugen. Es gibt nur dann ein aktives Eingangssignal, wenn der Chip Daten senden möchte. Triggert man nun mit der ersten Flanke des Eingangssignals das monostabile Zeitglied, erhält man als Ausgang des Zeitgliedes ein Steuersignal. Insbesondere sollte das Zeitglied nachtriggerbar realisiert werden und so eingestellt sein, dass es etwa nach einer Zeit von der 1 bis 2-fachen Bitdauer (also maximal der FGT, Frame Guard Time) in den Ausgangszustand zurückfällt. Somit steuert das Steuersignal wieder einen Empfangsbetrieb an, wenn keine Daten mehr gesendet werden.

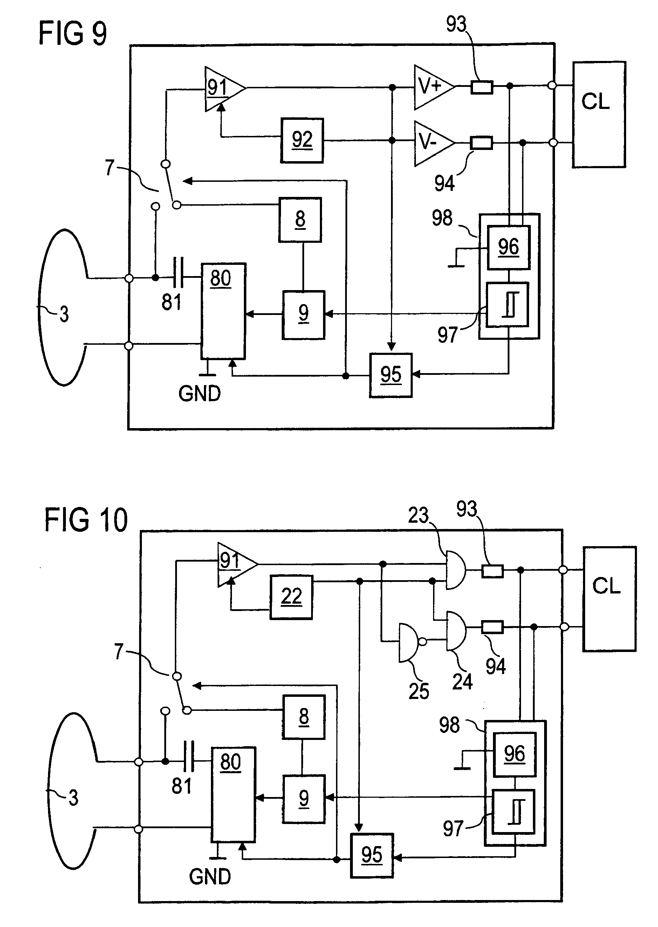

Figur 9 zeigt schematisch den Aufbau eines Interfacebausteins zur Anbindung an einen Chip mit herkömmlicher HF-Schnittstelle.

Die erfindungsgemäße aktive Transpondereinheit verfügt über einen Empfangszweig und einen Sendezweig. Der Empfangszweig besteht aus einer Antenne 3, einem Eingangsverstärker 91, einer automatischen Verstärkungsregelung 92, sowie einem Verstärker der bevorzugt als Gegentaktverstärker (V+, V-) ausgeführt ist. Ferner ist ein Transponderchip CL über seine Antennenanschlüsse mit dem Gegentaktverstärker verbunden.

Bei dem Transponderchip CL handelt es sich um einen herkömmlichen RFID-Chip entsprechend dem Stand der Technik. Er wird normalerweise an seinen Anschlüssen mit einer Antenne, z. B. in einer Chipkarte, verbunden. Ferner ist der Transponderchip CL so ausgelegt, dass die Datenübertragung von der Transpondereinheit zu einem Lesegerät mittels Lastmodulation durchgeführt wird. Dies ist bei den üblichen, auf 13,56 MHz oder auch 125 kHz eingesetzten RFID-Systemen ohnehin fast immer der Fall (z. B. ISO/IEC 14443, ISO/IEC 15693, ISO/IEC 18000-3).

Der Sendezweig besteht aus einer Demodulationsschaltung 97, einer Modulatorschaltung 9, einem Oszillator 8 (z. B. 13.56 MHz), einer Steuerung 95, sowie einem Sendeverstärker 80 verbunden mit der Antenne 3. Die Demodulationsschatung 98 kann zum Beispiel aus einem Gleichrichter 96 und einem Schwellwertschalter 97 bestehen.

Im Empfangsbetrieb wird in der Antenne 3 durch das magnetische Feld eines entfernten RFID-Lesegerätes eine Spannung induziert. Zusammen mit dem Kondensator 81 bildet die Antenne 3 einen Parallelschwingkreis, dessen Resonanzfrequenz in etwa der Sendefrequenz des RFID-Lesegerätes entspricht. Die so am Schwingkreis anstehende Spannung wird über den Schalter 7 dem Eingangsverstärker 91 zugeführt. Über eine Verstärkungsregung 92 wird nun der Verstärkungsgrad des Eingangsverstärkers 91 so nachgeführt, dass die Ausgangsamplitude der vom Eingangsverstärker 91 verstärkten Spannung weitgehend konstant bleibt. Die Zeitkonstante der Regelung wird dabei bevorzugt so eingestellt, dass die Ausgangsspannung des Verstärkers 91 zwar bei unterschiedlicher Entfernung zum Lesegerät (d. h. unterschiedlich hohe Induktionsspannung in der Spule 3 konstant bleibt, Modulationssignale hingegen (z. B. 10% ASK mit 106 kBit/ s) durch eine zu schnelle Regelung nicht unterdrückt werden.

Das Ausgangssignal des Verstärkers 91 wird einem weiteren Verstärker, bevorzugt einem Gegentaktverstärker (V+, V-) zugeführt. Das Ausgangssignal des Gegentaktverstärkers wird über (wenigstens) einen Serienwiderstand 93 den Anschlüssen des kontaktlosen RFID-Chips CL zugeführt. Die Amplitude des Ausgangssignals des Gegentaktverstärkers V+/V- ist dabei so gewählt, dass der RFID-Chip CL durch das Ausgangssignal mit ausreichend Energie zum Betrieb versorgt werden kann.

Der RFID-Chip CL erhält somit ein Signal, welches im Zeitverlauf dem Signal des entfernten Lesegerätes entspricht und sich diesem in der Amplitude proportional verhält. Der RFID-Chip ist damit auch in der Lage, von diesem Lesegerät gesendete Kommandos zu empfangen, auszuwerten und ggf. abzuarbeiten.

Sobald der RFID-Chip CL ein Kommando empfangen und abgearbeitet hat, versucht er eine Antwort an das entfernte Lesegerät zurückzusenden. Hierzu verwendet der RFID-Chip üblicherweise eine Lastmodulation, d. h. ein zusätzlicher Parallelwiderstand im Chip wird im Takt des Modulationssignals ein und ausgeschaltet. Dies führt zu messbaren Schwankungen im Spannungsabfall an den Widerständen 93, 94. Mit anderen Worten, die HF-Wechselspannung an den Anschlüssen wird in der Amplitude moduliert. Durch die Demodulatorschaltung 98 wird dieses amplitudenrnodulierte Wechselspannungssignal demoduliert und das ursprüngliche Modulationssignal somit weder rekonstruiert.

Die Demodulationsschaltung 98 besteht im einfachsten Fall aus einem Brückengleichrichter 96 und einem Schellwertschalter 97. Eine weitere Möglichkeit besteht darin die Demodulationsschaltung aus einem A/ D-Wandler und einer nachfolgenden Signalverarbeitung (z. B. einem DSP-Prozessor mit Software) zu realisieren. Bei RFID- Systemen die mit Lastmodulation mit Hilfsträger arbeiten, ist auch ein Ausfiltern eines durch die Lastmodulation entstandenen Hilfsträgerbandes (Oberes Hilfsträgerband 13.56 MHz + f_{HT}, Unteres Hilfsträgerband -13,56 Mhz - f_{HT}) und eine nachfolgende Verarbeitung möglich.

Das durch die Demodulationsschaltung 97 rekonstruierte Modulationssignal wird auch einer Steuerung 95 zugeführt. Diese schaltet die erfindungsgemäße Schaltung mit der ersten Flanke des Modulationssignal möglichst verzögerungsfrei in einen Sendebetrieb um, so dass die vom RFID-Chip CL erzeugten Daten auch an das entfernte Lesegerät übertragen werden können. Hierzu wird zunächst der Schalter 7 von der Antenne 3 auf den Oszillator 8 (13.56 MHz) umgeschaltet. Dies ist notwendig, um den RFID-Chip CL auch weiterhin mit einer Wechselspannung der richtigen Frequenz versorgen zu können. Gleichzeitig wird durch die Steuerung 95 der Verstärker 80 aktiviert.

Das rekonstruierte Modulationssignal sowie das Signal des Oszillators 8 wird der Modulatorschaltung 9 zugeführt. Die genaue Funktion einer solchen Schaltung ist bereits ausführlich beschrieben worden. Das Ausgangssignal der Modulatorschaltung 9 wird dem Verstärker 80 zugeführt und über die Antenne 3 an das entfernte Lesegerät gesendet.

Wird der Steuerung 95 für eine definierte Zeit t kein Modulationssignal mehr zugeführt, so ist erfindungsgemäß vorgesehen, das diese die erfindungsgemäße Schaltung automatisch wieder in den Empfangsbetrieb zurückschaltet. Die Dauer der Zeit t wird zweckmäßigerweise zwischen der

Dauer eines Bits (ISO 14443-A: ∼10 µs) und der Frame Delay Time (minimale Zeit bis zum nächsten Signal eines Lesegerätes, ISO 14443-A: ∼ 86 µs) eingestellt.

Ein wichtige Rolle kommt dem an der Steuerung 95 vom Empfangszweig (91, 92, V+, V-) eingehenden Signal zu. Sendet ein Lesegerät an die Transpondereinheit Daten mittels einer Amplitudenmodulation des ausgesendeten Feldes (z. B. 150/IEC 14443-A:100% ASK, ISO/IEC 14443-B:10% ASK) so wird diese Modulation auch an den Transponderchip CL weitergeleitet. Die Demodulationsschaltung 98 kann dabei möglicherweise nicht zwischen einem Modulationssignal von einem Lesegerät und einer Lastmodulation des RFID-Chips CL unterscheiden, da sich beide als Amplituderunodulation des HF-Signals an den Anschlüssen des RFID-Chips CL äußern.

Eine Lastmodulation des Transponderchips CL ist jedoch ausschließlich an den Anschlüssen, ein Modulationssignal des Lesegerätes hingegen bereits im Empfangszweig (91, 92, V+, V-) der erfindungsgemäßen Schaltung zu erkennen. Es ist daher vorgesehen, die erfindungsgemäße Schaltung nur dann in den Sendebetrieb zu schalten, wenn ein Modulationssignal (Amplitudenmodulation) ausschließlich an den Anschlüssen des RFID-Chips CL, nicht jedoch im Empfangszweig detektiert werden kann, da es sich nur in diesem Fall um eine Lastmodulation handelt. In Figur 9 wird dies durch das in die Steuerung 95 vom Empfangszweig (91, 92, V+, V-) eingespeiste Signal angedeutet.

Eine zweite Möglichkeit zur Unterscheidung besteht in der Auswertung der Modulationstiefe des Signals an den Anschlüssen des RFID-Chips. Durch Lastmodulation wird eine Modulationstiefe kleiner 100% erreicht. Im Laboraufbau wurden ca. 25% ermittelt, andere Werte ergeben sich aus Kombination von unterschiedlichen Widerständen 93, 94 mit verschiedenen RFID-Chips CL. Es ist daher vorgesehen, die Unterscheidung zwischen der Last-modulation und der Modulation des Lesegerätes durch das Ermitteln der Modulationstiefe anhand von vorgegebenen Schaltschwellen vorzunehmen. Liegt die Stärke des Modulationssignals über einer ersten, hohen Schwelle, so liegt ein Signal des Lesegerätes vor. Ist das Modulationssignal dagegen kleiner als die erste Schaltschwelle und optional größer als eine zweite Schaltschwelle, wird erkannt, dass eine Lastmodulation vorliegt. Eine Umschaltung in den Sendebetrieb erfolgt, wenn die Modulation durch eine Lastmodulation hervorgerufen wurde.

Figur 10 zeigt schematisch den Aufbau eines vereinfachten Interfacebausteins zur Anbindung an einen Chip mit herkömmlicher HF-Schnittstelle.

In dieser Ausführungsform wird anstelle eines linearen Verstärkers ein TTL-Treiber in Gegentaktschaltung 23, 24, 25 eingesetzt. Ein Modulationsdetektor 22 dient der Erkennung einer vom Lesegerat gesendeten Amplitudenmodulation und schaltet erfindungsgemäß während der Modulationspulse des Lesegerätes, das eine 100% ASK-Modulation ausführt, beide Ausgänge der Gegentaktschaltungen 23, 24 auf einen Low-Pegel. Verwenden dagegen der Transponderchip CL und das Lesegerät eine 10% - ASK-Modulation für die Datenübertragung (beispielsweise gemäß ISO/IEC 14443-B) so ist vorgesehen, dass der Modulationsdetektor 22 im Takt der empfangenen Modulationssignale zwischen zwei Gegentaktschaltungen mit unterschiedlichem Pegel des Ausgangssignals umschaltet.

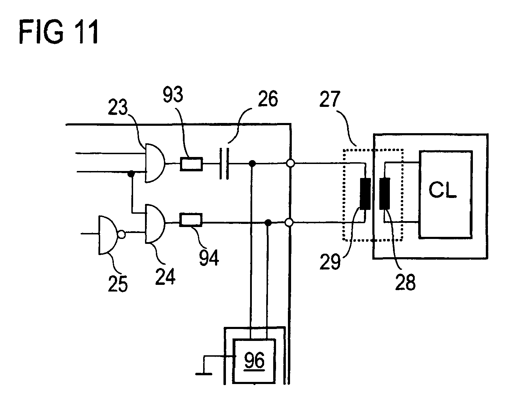

Eine weitere Möglichkeit, die aber nicht Teil der Erfindung ist, der Ankopplung des Transponderchips CL besteht in einer kapazitiven oder auch induktiven Ankopplung. Figur 11 zeigt den relevanten Ausschnitt eines vereinfachten Interfacebausteins zur induktiven Anbindung an einen Transponder.

Für eine induktive Ankopplung verfügt die Schaltung über eine zusätzliche Antenne 29, welche mittels eines Kondensators 26 in Resonanz zur Arbeitsfrequenz (z. B. 13,56 MHz) gebracht werden kann. Ein Transponder, bestehend aus einem Transponderchip CL und einer Antenne 28 wird in unmittelbarer Nähe der Antenne 29 positioniert, so dass eine möglichst gute magnetische Kopplung zwischen den Antennen 28 und 29 erreicht werden kann. Auch bei dieser Anordnung kann eine Lastmodulation des Transponderchips CL leicht detektiert werden.

Der induktiv koppelbare Interfacebaustein und eine damit verbundene weitere Antenne (siehe Bezugszeichen 3 in Fig. 10) kann in einem Endgerät angeordnet sein. Die Reichweite eines gewöhnlichen Transponders kann mit Hilfe eines solchen Endgerätes erhöht werden. Der Besitzer eines Mobilfunkgerätes könnte beispielsweise eine Kommunikation zwischen seinem Transponder und einem ungünstig angeordneten oder aus anderen Gründen nicht komfortabel erreichbaren Lesegerät aufbauen, indem er den Transponder an sein erfindungsgemäß mit einem induktiv koppelbaren Interfacebaustein versehenes Mobilfunkgerät hält.

Die nachfolgende Tabelle zeigt Ergebnisse durchgeführter Reichweitenmessungen:

| Transponder | Antennengröße | Reichweite |
|---|---|---|
| Kontaktlose Chipkarte | 80 x 50 mm² | 7cm |
| Optimierter digitaler Ringmodulator XOR | 80 × 50 mm² | 50 cm |
| Optimierter digitaler Ringmodulator XOR | 20 × 20 mm² | 25 cm |

Wie aus der Tabelle abzulesen ist, werden mit dem erfindungsgemäßen Verfahren auch bei sehr kleinen Antennen große Kommunikationsreichweiten erzielt.

Es wurde festgestellt, dass kleine Antennen, z.B. in einer SIM-Karte mit eigener Antenne (ca. 15x25 mm²), mit einer herkömmlichen Lastmodulation nur sehr geringe Lesereichweiten erreichen. Häufig ist es sogar unmöglich, mit einem kontaktlosen Lesegerät zu kommunizieren, wenn die SIM-Karte mit Antenne beispielsweise in einem Mobilfunkgerät angeordnet ist. Wird einer der erfindungsgemäßen Sender in einem mobilen Endgerät eingesetzt wird nicht die Reichweite deutlich erhöht. Zudem kann vorteilhaft ausgenutzt werden, dass mobile Endgeräte wie Mobilfunkgeräte, PDAs, etc. eine eigene Energieversorgung (Akku) besitzen, welche auch zur Versorgung einer erfindungsgemäßen Schaltung verwendet werden kann.

Zugunsten der Lesbarkeit der vorliegenden Beschreibung wurden die einzelnen vorteilhaften Merkmale und Anordnungen nicht in jeder Ausführungsform dargestellt, diskutiert und kombiniert. Teilaspekte der einzelnen Ausführungsformen sind untereinander kombinierbar, wie es anhand der Beispiele in den nachfolgenden Absätzen deutlich wird.

Die einzelnen funktionalen Komponenten der Transpondereinheit: Antenne, Schnittstelleneinheit, Chip und gegebenenfalls Spannungsversorgungseinheit können in verschiedensten Kombinationen separat voneinander oder gemeinsam in einer Einheit integriert angeordnet sein. Eine erfindungsgemäße Transpondereinheit kann beispielsweise als besonders ausgebildeteter Transponder, in einem tragbaren Datenträger, insbesondere einer Chipkarte, gebildet sein, der optional eine Batterie aufweist. Eine tragbarer Datenträger, insbesondere eine SIM-Karte, mit Chip und Schnittstelleneinheit kann in einem mobilen Endgerät mit einer externen Spannungsquelle und/ oder einer externen Antenne verbunden werden. Die Schnittstelleneinheit kann in einem Endgerät angeordnet, mit einer eigenen oder einer externen Antenne verbunden sein, und mit einem Chip kommunizieren, der reversibel oder fest im Endgerät oder temporär am Endgerät angeordnet ist.

Eine geeignete Modulatorschaltung kann bezogen auf den Anwendungsfall in beispielsweise den oben genannten Komponentenkombinationen gewählt werden. Auch die verschiedenen gezeigten Arten von Hilfsträgermodulatoren und Trägerfrequenzmodulatoren können in einem Modulator theoretisch beliebig kombiniert werden.

## Patentansprüche

1. Verfahren zur Übertragung von Daten von einem tragbaren Datenträger mit einer Transpondereinheit (1) zu einem Lesegerät (100), zu welchem Daten von Transpondern durch Lastmodulation eines Feldes des Lesegerätes übertragen werden können, **dadurch gekennzeichnet, daß** die Transpondereinheit (1) in einem ersten Betriebsmodus ein moduliertes Transponderfeld (20) als Signal erzeugt und sendet, welches für das Lesegerät (100) als eine Lastmodulation des Lesegerätfeldes (110) durch einen Transponder auswertbar ist, um die Daten zu dem Lesegerät (100) zu übertragen, wobei zur Erzeugung des ausgehenden Signals ein Ringmodulator (9) verwendet wird.

2. Verfahren nach Anspruch 1, **dadurch gekennzeichnet, daß** das Signal des Ringmodulators (9) über eine Antenne (3) an das Lesegerät (100) übertragen wird.

3. Verfahren nach Anspruch 1 oder 2, **gekennzeichnet durch** den Schritt des Zuführens der zu sendenden Daten und eines Oszillatorsignals, welches **durch** einen Oszillator (8) in der Einheit erzeugt wird, an den Ringmodulator (9).

4. Verfahren nach einem der Ansprüche 2 oder 3, **dadurch gekennzeichnet, daß** dem Ringmodulator das Oszillatorsignal und ein Signal zugeführt wird, welches erzeugt wird durch Modulieren eines Hilfsträgersignals einer bestimmten Frequenz mittels der zu sendenden Daten.

5. Verfahren nach Anspruch 4, **gekennzeichnet durch** logisches Verknüpfen des modulierten Hilfsträgersignals und des Oszillatorsignals mittels des Ringmodulators.

6. Verfahren nach einem der Ansprüche 3 bis 5, **gekennzeichnet durch** einen Schritt des Erzeugens der Frequenz des Hilfsträgersignals **durch** binäre Teilung der Frequenz des Oszillatorsignals.

7. Verfahren nach einem der Ansprüche 1 bis 6, **gekennzeichnet durch** einen Schritt des Begrenzens einer an der Antenne (3) des Transponders **durch** das Lesegerät (100) induzierten Spannung mittels eines Spannungsbegrenzers.

8. Verfahren nach einem der Ansprüche 3 bis 7, **gekennzeichnet durch** den Schritt des Koppelns des Oszillatorsignals mit dem vom Lesegerät (100) empfangenen Signal über eine Phase-Locked-Loop-(PLL)-Schaltung.

9. Verfahren nach einem der Ansprüche 1 bis 8, **gekennzeichnet durch** einen Schritt des Verstärkens des Signals, bevor es an das Lesegerät (100) übertragen wird.

10. Verfahren nach einem der Ansprüche 3 bis 9, **dadurch gekennzeichnet, dass** das Oszillatorsignal mittels der zu sendenden Daten moduliert wird.

11. Tragbarer Datenträger mit Transpondereinheit (1) zur Übertragung von Daten zu einem Lesegerät (100), zu welchem Daten von Transpondern durch Lastmodulation eines Feldes des Lesegerätes übertragen werden können, mit:
einer Antenne (3) zum Übertragen eines Signals von und/ oder zu dem Lesegerät (100) und
einem Modulator zum Erzeugen eines über die Antenne (3) an das Lesegerät zu übertragenden Signals;
**dadurch gekennzeichnet, dass**
die Transpondereinheit einen Ringmodulator als Modulator umfasst und ein Signal erzeugt, welches für das Lesegerät als eine Lastmodulation durch einen Transponder auswertbar ist, um die Daten in einem ersten Betriebsmodus zu dem Lesegerät zu übertragen.

12. Tragbarer Datenträger nach Anspruch 11, **gekennzeichnet durch** einen Empfänger (4) zum Demodulieren eines vom Lesegerät (100) übertragenen Signals, um daraus Daten zu extrahieren; und
eine elektronische Schaltung, die eingerichtet ist, die extrahierten Daten zu verarbeiten und an das Lesegerät (100) zu sendende Daten zu erzeugen.

13. Tragbarer Datenträger nach einem der Ansprüche 11 oder 12, **gekennzeichnet durch** einen Oszillator (8) zum Erzeugen eines Oszillatorsignals; und den Ringmodulator (9), der eingerichtet ist, das Oszillatorsignal mittels der zu sendenden Daten zu modulieren und daraus das Ausgangssignal zu erzeugen.

14. Tragbarer Datenträger nach einem der Ansprüche 11 bis 13, **gekennzeichnet durch** eine elektronische Baugruppe (11) zum Modulieren eines Hilfsträgersignals mit einer bestimmten Frequenz mittels der zu sendenden Daten, um dem Ringmodulator (9) die zu sendenden Daten als ein moduliertes Hilfsträgersignal zuzuführen.

15. System zur Datenübertragung umfassend einen tragbaren Datenträger nach einem der Ansprüche 11 bis 14 und ein Transponder-Lesegerät (100).

## Claims

1. A method for transferring data from a portable data carrier having a transponder unit (1) to a reading device (100) to which data can be transferred from transponders through load modulation of a field of the reading device, **characterized in that** the transponder unit (1), in a first operating mode, generates and sends a modulated transponder field (20) as a signal which is evaluable for the reading device (100) as a load modulation of the reading device field (110) by a transponder in order to transfer the data to the reading device (100), with a ring modulator (9) being employed for generating the outgoing signal.

2. The method according to claim 1, **characterized in that** the signal of the ring modulator (9) is transferred to the reading device (100) via an antenna (3).

3. The method according to claim 1 or 2, **characterized by** the step of supplying the data to be sent, and an oscillator signal which is generated by an oscillator (8) in the unit, to the ring modulator (9).

4. The method according to either of claims 2 and 3, **characterized in that** there is supplied to the ring modulator the oscillator signal and a signal which is generated by modulating a subcarrier signal of a certain frequency by means of the data to be sent.

5. The method according to claim 4, **characterized by** logically combining the modulated subcarrier signal and the oscillator signal by means of the ring modulator.

6. The method according to any of claims 3 to 5, **characterized by** a step of generating the frequency of the subcarrier signal through binary division of the frequency of the oscillator signal.

7. The method according to any of claims 1 to 6, **characterized by** a step of limiting a voltage induced by the reading device (100) on the antenna (3) of the transponder unit, by means of a voltage limiter.

8. The method according to any of claims 3 to 7, **characterized by** the step of coupling the oscillator signal with the signal received from the reading device (100), via a phase-locked loop (PLL) circuit.

9. The method according to any of claims 1 to 8, **characterized by** a step of amplifying the signal before it is transferred to the reading device (100).

10. The method according to any of claims 3 to 9, **characterized in that** the oscillator signal is modulated by means of the data to be sent.

11. A portable data carrier having a transponder unit (1) for transferring data to a reading device (100) to which data can be transferred from transponders through load modulation of a field of the reading device, having:
an antenna (3) for transferring a signal from and/or to the reading device (100), and
a modulator for generating a signal to be transferred to the reading device via the antenna (3);
**characterized in that**
the transponder unit comprises a ring modulator as a modulator and generates a signal which is evaluable for the reading device as a load modulation by a transponder in order to transfer the data to the reading device in a first operating mode.

12. The portable data carrier according to claim 11, **characterized by**
a receiver (4) for demodulating a signal transferred from the reading device (100) in order to extract data therefrom; and
an electronic circuit which is set up to process the extracted data and to generate data to be sent to the reading device (100).

13. The portable data carrier according to either of claims 11 and 12, **characterized by** an oscillator (8) for generating an oscillator signal; and the ring modulator (9) which is set up to modulate the oscillator signal by means of the data to be sent and to generate the output signal therefrom.

14. The portable data carrier according to any of claims 11 to 13, **characterized by** an electronic component group (11) for modulating a subcarrier signal with a certain frequency by means of the data to be sent in order to supply the data to be sent to the ring modulator (9) as a modulated subcarrier signal.

15. A system for data transfer comprising a portable data carrier according to any of claims 11 to 14 and a transponder reading device (100).

## Revendications

1. Procédé de transmission de données d'un support de données portable comprenant une unité de transpondeur (1) à un appareil de lecture (100) auquel des données de transpondeurs peuvent être transmises par modulation de charge d'un champ de l'appareil de lecture, **caractérisé en ce que** l'unité de transpondeur (1), dans un premier mode de fonctionnement, génère et envoie un champ de transpondeur (20) modulé en tant que signal, lequel est évaluable pour l'appareil de lecture (100), en tant qu'une modulation de charge du champ de l'appareil de lecture (110) par un transpondeur, afin de transmettre les données à l'appareil de lecture (100), un modulateur en anneau (9) étant utilisé pour la génération du signal sortant.

2. Procédé selon la revendication 1, **caractérisé en ce que** le signal du modulateur en anneau (9) est transmis par une antenne (3) à l'appareil de lecture (100).

3. Procédé selon la revendication 1 ou 2, **caractérisé par** l'étape de l'acheminement des données à envoyer et d'un signal d'oscillateur, généré par un oscillateur (8) dans l'unité, au modulateur en anneau (9).

4. Procédé selon une des revendications 2 ou 3, **caractérisé en ce qu'**il est acheminé au modulateur en anneau (9) le signal d'oscillateur et un signal généré par modulation d'un signal de sous-porteuse d'une certaine fréquence au moyen des données à envoyer.

5. Procédé selon la revendication 4, **caractérisé par** la combinaison logique du signal de sous-porteuse modulé et du signal d'oscillateur au moyen du modulateur en anneau.

6. Procédé selon une des revendications de 3 à 5, **caractérisé par** une étape de la génération de la fréquence du signal de sous-porteuse par division binaire de la fréquence du signal d'oscillateur.

7. Procédé selon une des revendications de 1 à 6, **caractérisé par** une étape de la limitation d'une tension induite à une antenne (3) du transpondeur par l'appareil de lecture (100) au moyen d'un limiteur de tension.

8. Procédé selon une des revendications de 3 à 7, **caractérisé par** l'étape du couplage du signal d'oscillateur avec le signal reçu par l'appareil de lecture (100) par l'intermédiaire d'un montage phase locked loop (PLL).

9. Procédé selon une des revendications de 1 à 8, **caractérisé par** une étape d'amplification du signal avant qu'il soit transmis à l'appareil de lecture (100).

10. Procédé selon une des revendications de 3 à 9, **caractérisé en ce que** le signal d'oscillateur est modulé au moyen des données à envoyer.

11. Support de données portable comprenant une unité de transpondeur (1) pour la transmission de données à un appareil de lecture (100) auquel des données de transpondeurs peuvent être transmises par modulation de charge d'un champ de l'appareil de lecture, comprenant :
une antenne (3) pour transmettre un signal du et/ou vers l'appareil de lecture (100) et
un modulateur pour générer un signal à transmettre par l'intermédiaire de l'antenne (3) à l'appareil de lecture ;
**caractérisé en ce que**
l'unité de transpondeur comprend en tant que modulateur un modulateur en anneau (9) et génère un signal qui est évaluable pour l'appareil de lecture en tant qu'une modulation de charge par un transpondeur afin de transmettre les données dans un premier mode de fonctionnement à l'appareil de lecture.

12. Support de données portable selon la revendication 11, **caractérisé par** un récepteur (4) destiné à démoduler un signal transmis par l'appareil de lecture (100) afin d'en extraire des données; et par un circuit électronique configuré pour traiter les données extraites et pour générer des données à envoyer à l'appareil de lecture (100),

13. Support de données portable selon une des revendications 11 ou 12, **caractérisé par** un oscillateur (8) destiné à générer un signal d'oscillateur ; et par le modulateur en anneau (9) configuré pour moduler le signal d'oscillateur au moyen des données à envoyer et pour générer à partir de cela le signal de sortie.

14. Support de données portable selon une des revendications de 11 à 13, **caractérisé par** un ensemble électronique (11) destiné à moduler un signal de sous-porteuse à une certaine fréquence au moyen des données à envoyer afin d'acheminer au modulateur en anneau (9) les données à envoyer en tant qu'un signal de sous-porteuse modulé.

15. Système de transmission de données, comprenant un support de données portable selon une des revendications de 11 à 14 et un appareil de lecture de transpondeur (100).
